# EUROPÄISCHE PATENTANMELDUNG

(11) **EP 1 646 019 A1**
(43) Veröffentlichungstag der Anmeldung: **12.04.2006**
(21) Anmeldenummer: 05016477.1
(22) Anmeldetag: 29.07.2005
(51) Int. Cl.: G07F 19/00

(54) **Verfahren und Kommunikationssystem zum Abwickeln eines Zahlungsverkehrs**

(30) Priorität: 05.10.2004 DE 102004049009
(71) Anmelder: Deutsche Telekom AG, 53113 Bonn (DE)
(72) Erfinder: Harr, Tilmann, Dr., 63571 Gelnhausen (DE); Bäuerle, Steffen, 69250 Schönau (DE); Ochs, Hubertus, 61118 Bad Vilbel (DE)

(57) **Zusammenfassung**

Die Erfindung betrifft ein Verfahren und ein Kommunikationssystem zum Abwickeln eines Zahlungsverkehrs beim Kauf von Produkten über das Internet.

Es sind Verfahren und Systeme zum Bereitstellen von Internet-Diensten und deren Abrechnung über die Telefonrechnung des Käufers bekannt. Bei den bekannten Systemen wird der Kaufbetrag einer über das Internet erworbenen Ware ausschließlich über die Telefonverbindungskosten des Teilnehmeranschlusses des Käufers abgerechnet.

Dank der Erfindung kann der Kaufbetrag über das Internet erworbener Produkte unabhängig von den Kosten einer Telefonverbindung, über die sich der Käufer authentifiziert, bezahlt werden.

Hierzu wählt ein Käufer ein Produkt an einer Datenverarbeitungseinrichtung eines Händlers aus. Der Käufer wird aufgefordert, sich über ein Kommunikationsnetz einzuwählen, um sich gegenüber einer dem Rechnernetz zugeordneten Zahlungseinrichtung zu identifizieren. Nach erfolgreicher Identifizierung veranlasst die Datenverarbeitungseinrichtung des Händlers die Übermittlung der ausgewählten Produkte zum Käufer und signalisiert der Zahlungseinrichtung, den Kaufbetrag der ausgewählten Produkte zu buchen. Die Zahlungseinrichtung erzeugt einen den Kaufbetrag enthaltenden Rechnungsdatensatz und veranlasst die Erstellung einer entsprechenden Rechnung.

## Beschreibung

Die Erfindung betrifft ein Verfahren zum Abwickeln eines Zahlungsverkehrs beim Kauf von Produkten, die von wenigstens einem Händler mittels einer, an ein Rechnernetz angeschlossenen Datenverarbeitungseinrichtung angeboten werden. Die Erfindung betrifft ferner ein Kommunikationssystem, welches insbesondere zur Durchführung dieses Verfahrens geeignet ist.

Das Internet, ein weltweit umspannendes Rechnernetz, wird immer mehr als Händlerportal benutzt, über das verschiedene Händler ihre Produkte beliebigen Internet-Nutzern anbieten. Eine wichtige Problemstellung hierbei ist, auf welche Weise über das Internet abgewickelte Käufe zwischen Händler und Käufer abgerechnet werden.

Wichtige Anforderungen an ein funktionsfähiges Zahlungssystem sind, dass der Käufer unabhängig von seiner Internet-Zugangsart (Analogleitung, ISDN, DSL, Kabelmodem, LAN, WLAN), unabhängig vom Internet-Diensteanbieter, unabhängig von der Vermittlungsstellentechnologie des Internets und des Telefonnetzes, unabhängig vom eingesetzten Endgerät und ohne zusätzliche Hard- und Software das Zahlungssystem nutzen kann.

Es sind bereits Verfahren und Systeme bekannt, mit denen die über das Internet erworbenen Produkte auf der Telefonrechnung des Käufers abgerechnet werden.

Aus der WO 03/039099 ist ein solches Verfahren und System zum Bereitstellen und Abrechnen von Internetdiensten über eine Telefonrechnung bekannt. Bei diesem Verfahren wird jedem auswählbaren Internetdienst in eindeutiger Weise eine bepreiste Servicetelefonnummer zugeordnet. Will ein Kunde einen Dienst auswählen, wird zunächst der Kunde von einem Telefonnetzoperator authentifiziert, ob er berechtigt ist, entgeltpflichtige Internetdienste auf seiner Telefonrechnung abrechnen zu lassen. Wenn ja, wird ein Kommunikationsdatensatz erzeugt, der neben der Rufnummer des Kunde auch die Servicetelefonnummer des ausgewählten Diensteprofils zusammen mit zeitrelevanten Daten, wie zum Beispiel Beginn und Ende einer Datenübertragung, enthält. Der Kommunikationsdatensatz wird zu einer Abrechnungseinrichtung des Telefonnetzes übertragen, wobei das Abrechnungssystem des Telefonnetzes die vom Internet empfangenen Kommunikationsdatensätze in der gleichen Weise bearbeitet wie Kommunikationsdatensätze, die bei Abrechnung von Telefongesprächen im Telefonnetz erzeugt werden. Die in Verbindung mit dem ausgewählten Internetdienst angefallenen Kosten werden dann auf der Telefonrechnung des Kunden ausgewiesen.

Ein weiteres Verfahren zur Bezahlung von Internet-Informationen über die Telefonrechnung eines Kunden ist aus der WO 02/073555 A1 bekannt. Bei diesem Verfahren wird die entgeltpflichtige Telefonverbindung zu einer speziellen Telefondienst-Rufnummer, zum Beispiel eine hochtarifierte 0190er Rufnummer, verwendet, um Internet-Informationen zu bezahlen. Ein Kunde, der eine bestimmte Internet-Information anfordert erhält zunächst vom Server eines Bezahlungsdiensteanbieters eine tarifierte Rufnummer, die einem speziellen Telefon-Mehrwertdienst entspricht. Der Kunde wählt nun an seinem Telefon die erhaltene Rufnummer und bezahlt den Kaufbetrag der gewünschten Internet-Information über die hochtarifierte Telefonverbindung. Hierzu wird die Telefonverbindung solange aufrecht erhalten, bis die erforderlichen Entgelte aufgelaufen sind. Die entgeltpflichtigen Internet-Informationen werden jedoch nicht über die aufgebaute Telefonverbindung, sondern über einen speziellen Internet-Server zum Kunden übertragen.

Der Erfindung liegt die Aufgabe zugrunde, einen neuen Lösungsweg bei der Abrechnung von über ein Rechnernetz gekauften Produkten über eine Telefonrechnung des Käufers bereitzustellen.

An dieser Stelle sei bereits erwähnt, dass unter dem Begriff "Produkt" in der Beschreibung und auch in den Ansprüchen sowohl Daten jeglicher Art, Softwareprodukte als auch materielle Gegenstände zu verstehen sind.

Ein Kerngedanke der Erfindung ist darin zu sehen, dass die Autorisierung, d.h. Reservierung des Kaufbetrages eines erworbenen Produkts und dessen Buchung über ein Rechnernetz, vorzugsweise das Internet, abläuft, wohingegen die Authentisierung eines Käufers über ein separates Kommunikationsnetz, vorzugsweise ein öffentliches Fernsprechnetz, durchgeführt wird.

Ein weiterer Vorteil des erfindungsgemäßen Verfahrens und des erfindungsgemäßen Kommunikationssystems ist darin zu sehen, dass die Rechnung eines über das Rechnernetz erworbenen Produkts erst nach oder gleichzeitig mit der Lieferung des Produkts an den Käufer erstellt wird.

Das oben genannte technische Problem wird zum einen durch die Verfahrensschritte des Anspruchs 1 gelöst.

Danach ist ein Verfahren zum Abwickeln eines Zahlungsverkehrs beim Kauf von Produkten, die von wenigstens einem Händler mittels einer, an einem Rechnernetz angeschlossenen Datenverarbeitungseinrichtung angeboten werden, vorgesehen. Nach dem Verfahren wählt ein Käufer ein Produkt an einer Datenverarbeitungseinrichtung eines Händlers aus. Der Käufer wird dann aufgefordert, sich über ein Kommunikationsnetz, welches nicht das Rechnernetz ist, einzuwählen, um sich gegenüber einer dem Rechnernetz zugeordneten Zahlungseinrichtung zu identifizieren. Nach erfolgreicher Identifizierung oder Authentifizierung des Käufers veranlasst die Datenverarbeitungseinrichtung des Händlers die Übermittlung der ausgewählten Produkte zum Käufer und signalisiert der Zahlungseinrichtung, den in der Regel zuvor autorisierten Kaufbetrag der ausgewählten Produkte zu buchen. Die Zahlungseinrichtung erzeugt einen den Kaufbetrag enthaltenden Rechnungsdatensatz und veranlasst die Erstellung einer entsprechenden, für den Kunden bestimmten Rechnung.

Vorteilhafte Weiterbildungen des Verfahrens sind Gegenstand der Unteransprüche.

Im Unterschied zu den eingangs genannten Zahlungsverfahren, bei denen über das Internet gekaufte Produkte über kostenpflichtige Telefonverbindungen zu höhertarifierten Service-Rufnummer abgerechnet werden, ermöglicht das erfindungsgemäße Verfahren auch das Erstellen und die Übermittlung einer Quittung über den gebuchten Kaufbetrag zum Käufer.

Die Quittung wird vorzugsweise in der Zahlungseinrichtung erstellt und über das Kommunikationsnetz mittels automatischer Ansage oder zu einem späteren Zeitpunkt, in einer SMS-Nachricht, als autouatischer Rückruf oder per e-mail übermittelt, sofern seiner Rufnummer eine E-mail-Adresse zugeordnet ist.

Damit der Käufer seine getätigten Internet-Käufe kontrollieren kann, werden die Quittungen aller vergangenen Transaktion in der Zahlungseinrichtung gespeichert, wobei die protokollierten Quittungen auf Anforderung von einem berechtigten Käufer angesehen und ausgelesen werden können.

Gemäß einer vorteilhaften Weiterbildung des Verfahrens umfasst die Authentifizierung oder Identifizierung des Käufers gegenüber der dem Rechnernetz zugeordneten Zahlungseinrichtung folgende Schritte:
Nach Auswahl eines Produkts an der Datenverarbeitungseinrichtung des Händlers wird eine Verbindung von der Datenverarbeitungseinrichtung über das Rechnernetz zur Zahlungseinrichtung hergestellt. Die Zahlungseinrichtung übermittelt dann dem Käufer eine vorbestimmte Nummer, bei der es sich um eine kostenfreie Rufnummer oder eine niedrig bepreiste Servicenummer handeln kann. Der Käufer gibt danach beispielsweise über ein Telefon die vorbestimmte Nummer ein und wird über das Kommunikationsnetz mit einer der vorbestimmten Nummer zugeordneten Einrichtung verbunden. Ein Identifizierungscode des Käufers, welcher vorzugsweise dessen Anschlussrufnummer ist, wird zu dieser Einrichtung übertragen und von dort zur Zahlungseinrichtung weitergeleitet. Die Zahlungseinrichtung prüft anhand des Identifizierungscodes, ob der Käufer berechtigt ist, bei dem Händler Produkte zu kaufen. Weiterhin kann die Zahlungseinrichtung anhand des Identifizierungscodes auch prüfen, welche Produkte der Käufer bei einem bestimmten Händler kaufen darf. Die Zahlungseinrichtung signalisiert bei erfolgreicher Identifizierung der Datenverarbeitungseinrichtung des Händlers, dass der Käufer berechtigt ist, bei ihm einzukaufen. Auf diese Weise wird der zuvor zur Zahlungseinrichtung übertragene Kaufbetrag nach erfolgreicher Identifizierung des Käufers an der Zahlungseinrichtung autorisiert, d. h. für eine noch zu folgende Buchung reserviert.

Wie bereits erwähnt, kann es sich bei dem Identifizierungscode des Kunden um dessen Teilnehmer-Anschlussnummer handeln. In diesem Fall muss die Rufnummererkennung, das sogenannte CLI(Call Line Identification)-Leistungsmerkmal des Kommunikationsnetzes aktiviert sein, damit bei einem Verbindungsaufbau die Teilnehmer-Anschlussnummer zum Kommunikationsnetz übertragen und zur Identifizierung an die Zahlungseinrichtung weitergeleitet wird.

Bevor die Zahlungseinrichtung den Rechnungsdatensatz erzeugt, wird der Kaufbetrag von der Datenverarbeitungseinrichtung des Händlers noch einmal bestätigt und somit in der Zahlungseinrichtung gebucht.

Die Zahlungseinrichtung kann die Rechnung aus dem Rechnungsdatensatz selbst erstellen, oder den Rechnungsdatensatz zur Erstellung der Rechnung zu einer Berechnungseinrichtung übertragen. Die Berechnungseinrichtung kann dem Kommunikationsnetz, einem anderen Kommunikationsnetz oder dem Rechnungsnetz zugeordnet sein.

An dieser Stelle sei erwähnt, dass das Rechnernetz vorzugsweise das Internet und das Kommunikationsnetz ein öffentliches Fernsprechnetz oder auch ein Mobilfunknetz sein kann.

Für den Fall, dass ein Käufer auch höherwertige Produkte bei einem Internet-Händler kaufen will, kann verlangt werden, dass er sich zuvor an einer zentralen Einrichtung registrieren lassen muss.

In einer der Zahlungseinrichtung zugeordneten Speichereinrichtung können Käufer-spezifische Daten abgelegt und aktualisiert werden, wobei in Abhängigkeit von den Käufer-spezifischen Daten den jeweiligen Käufern der Zugriff auf die Datenverarbeitungseinrichtung eines Händlers erlaubt oder verweigert werden kann. Bei den Käufer-spezifischen Daten kann es sich um ungültige Teilnehmer-Anschlussnummern und/oder nicht-zahlungsfähige Kunden handeln, denen dann der Zugriff verweigert wird.

Das oben genannte technische Problem wird ebenfalls durch ein Kommunikationssystem zum Abwickeln eines Zahlungsverkehrs beim Kauf von Produkten gelöst. Das Kommunikationssystem weist hierzu ein Kommunikationsnetz auf, mit dem ein Käufer über eine Endeinrichtung, vorzugsweise ein Telefon, verbunden ist. Ferner ist ein Rechnernetz, vorzugsweise das Internet vorgesehen, an das wenigstens eine Datenverarbeitungseinrichtung zum Anbieten von Produkten eines Händlers angeschlossen ist. Auf Seiten des Käufers ist eine Eingabeeinrichtung vorgesehen, über die der Käufer Produkte an der Datenverarbeitungseinrichtung eines Händlers auswählen kann. Die Eingabeeinrichtung kann ein Personalcomputer, ein PDA oder auch ein interaktiver Fernseher sein. Ferner ist eine Einrichtung vorgesehen, die den Käufer auffordern kann, sich über das Kommunikationsnetz einzuwählen, um sich gegenüber einer dem Rechnernetz zugeordneten Zahlungseinrichtung zu identifizieren oder zu authentifizieren, wobei die Zahlungseinrichtung eine Einrichtung zur Überprüfung der Käuferidentität aufweist. Die Datenverarbeitungseinrichtung des Händlers veranlasst unter Ansprechen auf eine erfolgreiche Identifizierung des Käufers die Übermittlung der ausgewählten Produkte zum Käufer und signalisiert der Zahlungseinrichtung, den Kaufbetrag der ausgewählten Ware zu buchen. Die Zahlungseinrichtung weist ferner eine Einrichtung zum Erzeugen eines den Kaufbetrag enthaltenden Rechnungsdatensatzes sowie eine Einrichtung auf, die die Erstellung der dazugehörenden Rechnung veranlasst.

Vorzugsweise ist der Zahlungseinrichtung eine Einrichtung zum Erstellen einer Quittung und zum Übertragen der Quittung, insbesondere über das Kommunikationsnetz, zum Käufer vorgesehen. Zum Ablegen von Quittungen getätigter Käufe ist der Zahlungseinrichtung ein Speicher zugeordnet.

Auf die im Speicher abgelegten Quittungen kann ein berechtigter Käufer zugreifen.

Vorzugsweise kann die Zahlungseinrichtung selbst aus dem Rechnungsdatensatz eine Rechnung erstellen.

Ferner kann eine Berechnungseinrichtung zum Erstellen einer Rechnung mit Hilfe eines Rechnungsdatensatzes vorgesehen sein, wobei die Zahlungseinrichtung den Rechnungsdatensatz zur Erstellung de Rechnung zur Berechnungseinrichtung überträgt, die dem Kommunikationsnetz, einem anderen Kommunikationsnetz oder dem Rechnungsnetz zugeordnet ist.

Ferner kann der Zahlungseinrichtung eine Speichereinrichtung zugeordnet sein, in der Käufer-spezifische Daten abgelegt sind. Ferner kann eine Einrichtung zum Aktualisieren der Käufer-spezifischen Daten sowie eine Einrichtung vorgesehen sein, die in Abhängigkeit von den Käufer-spezifischen Daten den jeweiligen Käufern den Zugriff auf die Datenverarbeitungseinrichtung eines Händlers erlaubt oder verweigert.

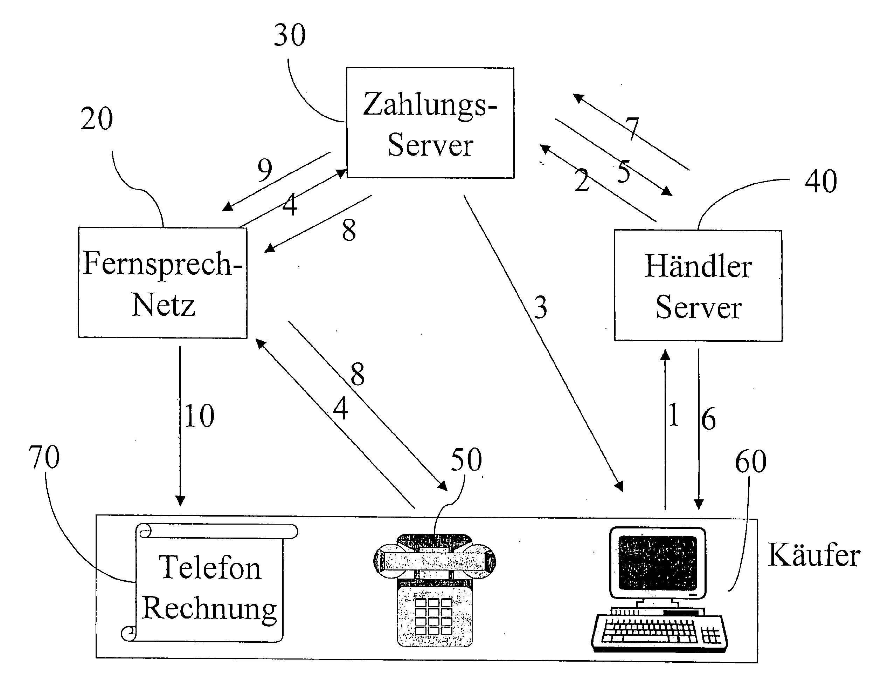

Die Erfindung wird nachfolgend anhand eines Ausführungsbeispiels in Verbindung mit einer einzigen Figur näher erläutert.

Die Figur zeigt schematisch ein Telefon 50 und einen Personalcomputer 60, welche bei einem Käufer implementiert sind. Symbolisch ist eine Telefonrechnung 70 beim Käufer eingegangen, die, wie nachfolgend noch näher erläutert wird, verwendet wird, um im Internet getätigte Käufe ausweisen zu können. Das Telefon 50 ist an einem schematisch dargestellten Fernsprechnetz 20 angeschlossen.

Es ist für einen Fachmann offensichtlich, dass das Telefon 50 über eine Anschlussleitung mit einer Vermittlungsstelle des Fernsprechnetzes verbunden ist, um Zugang zum Fernsprechnetz 20 zu haben. Bei dem Fernsprechnetz 20 kann es sich um ein öffentliches analoges oder digitales Fernsprechnetz, oder auch um ein Mobilfunknetz handeln. Der Personalcomputer 60 ist beispielsweise über einen Käuferseitigen DSL-Anschluss mit dem Internet (nicht dargestellt) verbunden. Über das Internet kann der Käufer mittels seines Personalcomputers 60 auf die auf einem Händlerserver 40 abgelegten Web-Seiten zugreifen, um angebotene Produkte kaufen zu können. Der Händlerserver 40 kann über das Internet mit einem Zahlungsserver 30 verbunden werden. Der Zahlungsserver 30, der einem Zahlungsdienstleister, auch Payment Provider genannt, zugeordnet ist, kann mit dem Fernsprechnetz 20 verbunden werden. Der Zahlungs-Server 30 kann somit als Schnittstelle zwischen dem Internet und dem Fernsprechnetz 20 betrachtet werden. Der Zahlungs-Server 30 dient unter anderem dazu, den Zahlungsverkehr beim Kauf von Produkten über das Internet zu steuern und zu überwachen.

Nachfolgend wird die Funktionsweise des in der Figur dargestellten Kommunikationssystems zum Abwickeln eines Zahlungsverkehrs beim Kauf von über das Internet angebotenen Waren näher erläutert.

Zunächst sei angenommen, dass für den Teilnehmeranschluss des Käufers das Ruferkennungs-Leistungsmerkmal, auch CLI (Call Line Identification)-Leistungsmerkmal aktiviert ist. Dadurch ist sichergestellt, dass bei der Einleitung eines Verbindungsaufbaus vom Telefon 50 des Käufers ins Fernsprechnetz 20 die Teilnehmerrufnummer des Käufers mit zum Fernsprechnetz übertragen wird.

Ferner sei angenommen, dass der Käufer über seinen Personalcomputer 60 einen Zugang zum Internet hat und im Augenblick anonym im Internet surft. Angenommen sei weiterhin, dass der potentielle Käufer zum Händler-Server 40 geleitet worden ist, auf dem ein Händler seine zahlreichen Hardware- und/oder Softwareprodukte zum Kauf anbietet. Wie symbolisch durch den mit Ziffer 1 bezeichneten Richtungspfeil dargestellt, sucht der Käufer aus dem Angebot des Händlers ein oder mehrere Produkte aus. Auf der angezeigten Web-Seite des Händlers kann ein Zahlungstastenfeld vorgesehen sein, auf welches der Käufer klicken kann. Eine Betätigung des Zahlungstastenfeldes bewirkt in an sich bekannter Weise, dass eine Verbindung über das Internet zum Zahlungsserver 30 hergestellt wird, wie dies durch den mit Ziffer 2 bezeichneten Richtungspfeil zwischen dem Händlerserver 40 und dem Zahlungsserver 30 dargestellt ist. Über diese Verbindung werden dann die vom Kunden zu den ausgewählten Produkten gehörenden Kaufpreise an den Zahlungsserver 30 geleitet. Auf dem Bildschirm des Personalcomputers 60 kann in einem besonderen Browser-Fenster Informationen des Zahlungsservers 30 dargestellt werden. Die Bereitstellung der Informationen auf dem Bildschirm des Personalcomputers 60 wird durch den mit Ziffer 3 bezeichneten Richtungspfeil in der Figur dargestellt. Der Zahlungsserver 30 übermittelt beispielsweise eine nur für die individuelle Zahlung der ausgewählten Produkte kurzfristig freigegebene kostenfrei Rufnummer, beispielsweise eine 0800-Rufnummer, die in dem besonderen Browser-Fenster angezeigt wird. Anstelle einer kostenfreien Rufnummer können auch andere, niedrig bepreiste, aber natürlich auch hoch bepreiste Servicenummern dem Käufer mitgeteilt werden.

Wichtig ist, an dieser Stelle darauf hinzuweisen, dass der Kaufbetrag der ausgewählten Produkte nicht über eine bepreiste Rufnummer erfolgt, sondern über einen festgelegten Kaufpreis, der nur zwischen dem Zahlungsdienstleister und dem Händler, aber nicht mit dem Betreiber des Fernsprechnetzes 20 vereinbart werden muss.

Die übermittelte Rufnummer, welche im vorliegenden Fall eine kostenfrei 0800-Rufnummer ist, gibt der Käufer an seinem Telefon 50 über das Tastaturfeld ein und leitet somit einen Verbindungsaufbau zu einer speziellen, dem Fernsprechnetz 20 zugeordneten Einrichtung, nicht dargestellt, ein. Da für den Teilnehmeranschluss des Käufers das Ruferkennungs-Leistungsmerkmal aktiviert ist, wird automatisch die Teilnehmer-Anschlussnummer des Käufers mit zu der angewählten Einrichtung übertragen. Infolge des aktivierten CLI- Leistungsmerkmalswird die Teilnehmer-Anschlussnummer an der Einrichtung erkannt. Die Teilnehmer-Anschlussnummer wird von der angewählten Einrichtung des Fernsprechnetzes 20 zum Zahlungsserver 30 übertragen, um den Käufer authentifizieren und identifizieren zu können. Die Übermittlung der Teilnehmer-Anschlussnummer des Käufers über das Fernsprechnetz 20 zum Zahlungsserver 30 ist in der Figur durch die mit Ziffer 4 gekennzeichneten Richtungspfeile dargestellt. Um die Identität des Käufers ermitteln zu können, ist im Zahlungsserver 30 eine Liste angemeldeter Käufer angelegt, in der beispielsweise deren Teilnehmer-Anschlussnummern als Identifizierungscode abgelegt sind. Ferner ist im Zahlungsserver 30 eine Liste der Händler abgelegt, mit denen der Zahlungsdienstleister eine Vereinbarung zur Abrechnung von über das Internet getätigten Transaktionen vereinbart hat. Ferner kann im Zahlungsserver 30 ein Speicher vorgesehen sein, in dem Käufer-spezifische Daten abgelegt sind. Bei diesen Käufer-spezifischen Daten kann es sich um Informationen handeln, die die Zahlungsfähigkeit oder Zahlungsunfähigkeit des jeweiligen Käufers widerspiegeln. Die Informationen können Käufer-bezogene Berechtigungen darstellen, derart, dass ein Käufer nur bei bestimmten Internet-Händlern, und gegebenenfalls nur bestimmte Produkte kaufen darf. Ergibt die Prüfung im Zahlungsserver 30, dass der Käufer berechtigt ist, die ausgewählten Produkte beim Händler des Händlerservers 40 zu kaufen, wird dieser Zustand dem Händlerserver 40 signalisiert. Diesen Vorgang nennt man auch Autorisierung des Kaufbetrages. Durch die Autorisierung des Kaufbetrages wird dem Händlerserver 40 signalisiert, dass der Käufer zahlungsfähig ist und die ausgewählten Waren auch kaufen darf. Der Händler weiß nunmehr, dass der Käufer zahlungsfähig ist und liefert die ausgewählte Ware aus. Sofern es sich bei den ausgewählten Produkten um Softwareprodukte oder Daten, wie z.B. Audio-Dateien, Video-Dateien handelt, können diese über die bestehende Internet-Verbindung zum Personalcomputer 60 des Käufers übertragen werden. Die elektronische Warenübertragung ist in der Figur durch den mit Ziffer 6 bezeichneten Richtungspfeil dargestellt. Denkbar ist auch, dass beispielsweise bei der Übertragung von Video-Dateien eine Übertragung direkt auf einen Fernseher erfolgt. Handelt es sich um materielle Produkte, so signalisiert der Händlerserver 40 dem Händler die Autorisierung des Kaufbetrages durch den Zahlungs-Server 30. Daraufhin veranlasst der Händler oder der Händler-Server 40 automatisch, dass die ausgewählten Produkte als Versandware, beispielsweise über einen Paketdienst, dem Käufer zugestellt werden.

Nach der Autorisierung des Kaufbetrages übermittelt der Händlerserver 40 noch einmal den Kaufbetrag zur Buchung zum Zahlungsserver 30 zurück. Dieser Vorgang wird in der Figur durch den mit Ziffer 7 gekennzeichneten Richtungspfeil dargestellt. Durch die Bestätigung des Kaufbetrages durch den Händlerserver 40 wird die vorher autorisierte Zahlung zahlungswirksam. Der Zahlungsserver 30 erzeugt dann aus dem gebuchten Kaufbetrag einen Rechnungsdatensatz, der an eine nicht dargestellte Berechnungseinheit des Netzbetreibers des Fernsprechnetzes 20 übertragen werden kann, wie dies durch den mit Ziffer 9 bezeichneten Richtungspfeil dargestellt ist. Die dem Fernsprechnetz 20 zugeordnete Berechnungseinheit berechnet aus dem Rechnungsdatensatz den Kaufbetrag der erworbenen Produkte und weist diesen auf der Telefonrechnung des Käufers aus. Die Telefonrechnung 70 kann neben dem Kaufbetrag auch Verbindungsentgelte aufweisen, die jedoch unabhängig vom Kaufpreis der über das Internet erworbenen Produkte berechnet werden. Die Telefonrechnung 70 kann dann auf herkömmlichem Wege dem Käufer zugestellt werden, wie dies beispielsweise durch den mit Ziffer 10 bezeichneten Richtungspfeil in der Figur dargestellt ist.

Optional kann der Zahlungsserver 30 über den gebuchten Kaufbetrag eine Quittung erstellen, die über das Fernsprechnetz 20 zum Käufer übertragen wird, wie dies durch die mit Bezugsziffer 8 gekennzeichneten Richtungspfeile dargestellt ist. Die Quittung kann über die bestehende Verbindung zwischen dem Telefon 50 und der gerufenen Einrichtung des Fernsprechnetzes 20, als automatischer Rückruf zum Telefon 50 oder einem daran angeschlossenen Anrufbeantworter oder als SMS- Nachricht zum Käufer übertragen werden.

Um den Nachweis getätigter Inernet-Transaktionen erleichtern zu können, ist beispielsweise im Zahlungsserver 30 ein Speicher vorgesehen, in dem die Quittungen aller vergangener Transaktionen gespeichert werden. Der Käufer kann sich beispielsweise über eine Internet-Verbindung alle Quittungen vom Zahlungsserver 30 auf seinem Personalcomputer 60 anzeigen lassen. Die Authentizierung des Käufers am Zahlungsserver 30 kann wiederum mittels einer kostenfreie 0180-Rufnummer über das Fernsprechnetz 20 bei dem Netzbetreiber erfolgen, welcher dem Zahlungsserver 30 die erfolgreiche Authentizierung signalisiert. Der Zahlungsserver 30 ermöglicht dann die Ansicht der Quittungen in einem Internet-Screen oder alternativ mittels automatischer Ansage über die Teilnehmerrufnummer des Käufers an das Telefon oder einen Anrufbeantworter.

An dieser Stelle sei erwähnt, dass der Payment-Provider des Zahlungsservers 30 und der Netzbetreiber des Fernsprechnetzes 20 dieselben Unternehmen sein können. Auch der Payment-Provider des Zahlungsservers 30 und der Händler des Händlerservers 40 können dasselbe Unternehmen sein.

Anstatt die Rechnung vom Betreiber des Fernsprechnetzes 20 erstellen zu lassen, kann auch ein Unternehmen eines separaten Kommunikationsnetzes oder der Payment-Provider des Zahlungsservers 30 für die Erstellung der Rechnung der Internet-Transaktionen verantwortlich sein. Mit anderen Worten können die Authentifizierung des Käufers und die Abrechnung des getätigten Kaufes auch von zwei verschiedenen Telefonnetzbetreibern vorgenommen werden.

Allerdings ist die Authentifizierung des Käufers und die Erstellung der Rechnung einer Internet-Transaktion über das Fernsprechnetz ein bevorzugtes Ausführungsbeispiel.

Ein Vorteil des erfindungsgemäßen Verfahrens ist darin zu sehen, dass der Telefonanruf über das Fernsprechnetz lediglich der Authentifizierung des Käufers am Zahlungsserver 30 dient. Ein weiterer Vorteil ist darin zu sehen, dass der Zahlungsserver 30 erst dann einen Rechnungsdatensatz über den Kaufbetrag erstellt, wenn die Kauftransaktion, d.h. die Autorisierung des Kaufbetrages sowie deren Buchung und die Auslieferung der Waren an den Käufer abgeschlossen worden ist. Ein weiterer Vorteil ist, dass die Abrechnung des Kaufbetrages einer über das Internet erworbenen Ware ausschließlich durch den Zahlungsserver 30, und somit unabhängig vom Telefonanruf des Käufers erfolgt. Der Provider des Zahlungsservers 30 kann somit unabhängig vom Betreiber des Fernsprechnetzes 20 die Kaufpreise festlegen und ist nicht an Bepreisungs-Vorgaben der Netzbetreiber für Servicerufnummern gebunden.

Ein weiterer Vorteil des beschriebenen Verfahrens ist darin zu sehen, dass der Käufer anhand seiner Teilnehmer-Anschlussnummer mittels des CLI-Leistungsmerkmals vom Fernsprechnetz erkannt wird, so dass der Zahlungsserver 30, dem die Teilnehmer-Anschlussnummer weitergeleitet wird, eine Authentizierung des Käufers unmittelbar vornehmen kann.

Anzumerken sei ferner, dass der Internet-Zugang des Käufers nicht an dem Teilnehmeranschluss erfolgen muss, zu dem die erstellte Telefonrechnung 70 gehört.

Der zur Authentifizierung des Käufers am Telefon 50 eingeleitete Anruf kann auch von einem anderen Telefonanschluss, der nicht der Telefonrechnung zugeordnet ist, erfolgen. Der Anruf zur Identifizierung des Käufers am Zahlungsserver 30 kann auch aus einem anderen als dem Fernsprechnetz 20 aus erfolgen. In diesem Fall ist jedoch der entsprechende Teilnehmeranschluss in einem vorherigen Registrierungsprozess dieser Telefonrechnung zuzuordnen. Voraussetzung hierfür ist, dass die Teilnehmer-Anschlussnummer über die Netzgrenzen hinweg in das andere Kommunikationsnetz übertragen wird.

## Patentansprüche

1. Verfahren zum Abwickeln eines Zahlungsverkehrs beim Kauf von Produkten, die von wenigstens einem Händler mittels einer, an ein Rechnernetz angeschlossenen Datenverarbeitungseinrichtung (40) angeboten werden, nach dem
ein Käufer ein Produkt an einer Datenverarbeitungseinrichtung (40) eines Händlers auswählt,
der Käufer aufgefordert wird, sich über ein Kommunikationsnetz (20) einzuwählen, um sich gegenüber einer dem Rechnernetz zugeordneten Zahlungseinrichtung (30) zu identifizieren,
nach einer erfolgreichen Identifizierung des Käufers die Datenverarbeitungseinrichtung (40) des Händlers die Übermittlung des ausgewählten Produkts zum Käufer veranlasst und der Zahlungseinrichtung (30) signalisiert, den Kaufbetrag des ausgewählten Produkts zu buchen,
die Zahlungseinrichtung (30) einen den Kaufbetrag enthaltenen Rechnungsdatensatz erzeugt und die Erstellung einer entsprechenden Rechnung veranlasst.

2. Verfahren nach Anspruch 1,
**dadurch gekennzeichnet, dass**
dem Käufer eine Quittung über den gebuchten Kaufbetrag übermittelt wird.

3. Verfahren nach Anspruch 2,
**dadurch gekennzeichnet, dass**
die Quittung in der Zahlungseinrichtung (30) erstellt und über das Kommunikationsnetz (20) zum Käufer übertragen wird.

4. Verfahren nach Anspruch 2 oder 3,
**dadurch gekennzeichnet, dass**
Quittungen getätigter Käufe in der Zahlungseinrichtung (30) gespeichert werden, die auf Anforderung von einem berechtigten Käufer angesehen werden können.

5. Verfahren nach einem der Ansprüche 1 bis 4,
**dadurch gekennzeichnet, dass**
die Identifizierung des Käufers gegenüber einer dem Rechnernetz zugeordneten Zahlungseinrichtung (30) folgende Schritte umfasst:
nach Auswahl eines Produkts an der Datenverarbeitungseinrichtung (40) des Händlers wird eine Verbindung von der Datenverarbeitungseinrichtung (40) zur Zahlungseinrichtung (30 über das Rechnernetz hergestellt;
dem Käufer wird von der Zahlungseinrichtung (30) eine vorbestimmte Nummer übermittelt,
der Käufer wählt die vorbestimmte Nummer und wird über das Kommunikationsnetz (20) mit einer der vorbestimmten Nummer zugeordneten Einrichtung verbunden;
ein Identifizierungscode des Käufers wird zu dieser Einrichtung und von dort zur Zahlungseinrichtung (30) übertragen;
die Zahlungseinrichtung (30) prüft anhand des Identifizierungscodes, ob der Käufer berechtigt ist, bei dem Händler ein Produkt zu kaufen, und
die Zahlungseinrichtung (30) signalisiert bei erfolgreicher Identifizierung der Datenverarbeitungseinrichtung (40 des Händlers, dass
der Käufer berechtigt ist, beim ihm einzukaufen.

6. Verfahren nach Anspruch 5,
**dadurch gekennzeichnet, dass**
der Identifizierungscode die Teilnehmer-Anschlussnummer des Käufers hinsichtlich des Kommunikationsnetzes (20) ist.

7. Verfahren nach Anspruch 5 oder 6,
**dadurch gekennzeichnet, dass**
die vorbestimmte Nummer eine kostenfreie Rufnummer oder eine niedrig bepreiste Servicenummer ist.

8. Verfahren nach einem der Ansprüche 1 bis 7,
**dadurch gekennzeichnet, dass**
die Zahlungseinrichtung (30) aus dem Rechnungsdatensatz die Rechnung erstellt.

9. Verfahren nach einem der Ansprüche 1 bis 8,
**dadurch gekennzeichnet, dass**
die Zahlungseinrichtung (30) den Rechnungsdatensatz zur Erstellung der Rechnung zu einer Berechnungseinrichtung überträgt, die dem Kommunikationsnetz (20), einem anderen Kommunikationsnetz oder dem Rechnungsnetz zugeordnet ist.

10. Verfahren nach einem der Ansprüche 1 bis 9,
**dadurch gekennzeichnet, dass**
das Rechnernetz das Internet und das Kommunikationsnetz (20) ein Fernsprechnetz ist.

11. Verfahren nach einem der Ansprüche 1 bis 10,
**dadurch gekennzeichnet, dass**
Käufer sich registrieren lassen müssen, bevor sie sich an der Zahlungseinrichtung (30) anmelden dürfen.

12. Verfahren nach einem der Ansprüche 1 bis 11,
**dadurch gekennzeichnet, dass**
Käufer-spezifische Daten in einer der Zahlungseinrichtung (30) zugeordneten Speichereinrichtung abgelegt und aktualisiert werden, und dass
in Abhängigkeit von den Käufer-spezifischen Daten den jeweiligen Käufern der Zugriff auf die Datenverarbeitungseinrichtung (40 eines Händlers erlaubt oder verweigert werden kann.

13. Kommunikationssystem zum Abwickeln eines Zahlungsverkehrs beim Kauf von Produkten, die von wenigstens einem Händler mittels einer, an ein Rechnernetz angeschlossenen Datenverarbeitungseinrichtung (40) angeboten werden, mit
einem Kommunikationsnetz (20),
einem Rechnernetz, an das wenigstens eine Datenverarbeitungseinrichtung (40) zum Anbieten von Produkten eines Händlers angeschlossen ist,
einer Eingabeeinrichtung (60), über die ein Käufer ein Produkt an der Datenverarbeitungseinrichtung (40) eines Händlers auswählen kann,
einer Einrichtung zum Auffordern des Käufers, sich über das Kommunikationsnetz (20 einzuwählen, um sich gegenüber einer dem Rechnernetz zugeordneten Zahlungseinrichtung (30) zu identifizieren, wobei die Zahlungseinrichtung (30) eine Einrichtung zur Überprüfung der Käuferidentität aufweist,
wobei die Datenverarbeitungseinrichtung (40) des Händlers unter Ansprechen auf eine erfolgreiche Identifizierung des Käufers die Übermittlung des ausgewählten Produkts zum Käufer veranlasst und der Zahlungseinrichtung (30) signalisiert, den Kaufbetrag des ausgewählten Produkts zu buchen, wobei
die Zahlungseinrichtung (30) eine Einrichtung zum Erzeugen eines den Kaufbetrag enthaltenen Rechnungsdatensatzes und eine Einrichtung aufweist, die die Erstellung der dazugehörenden Rechnung veranlasst.

14. Kommunikationssystem nach Anspruch 13
**dadurch gekennzeichnet, dass**
die Zahlungseinrichtung (30 eine Einrichtung zum Erstellen einer Quittung und zum Übertragen der Quittung, insbesondere über das Kommunikationsnetz, zum Käufer aufweist.

15. Kommunikationssystem nach Anspruch 14,
**dadurch gekennzeichnet, dass**
der Zahlungseinrichtung (30) ein Speicher zum Ablegen von Quittungen getätigter Käufe zugeordnet ist, auf die berechtigte Käufer zugreifen können.

16. Kommunikationssystem nach einem der Ansprüche 13 bis 15,
**dadurch gekennzeichnet, dass**
die Zahlungseinrichtung (30) aus dem Rechnungsdatensatz die Rechnung erstellt.

17. Kommunikationssystem nach einem der Ansprüche 13 bis 16,
**gekennzeichnet durch**
eine Berechnungseinrichtung zum Erstellen einer Rechnung mit Hilfe eines Rechnungsdatensatzes, wobei die Zahlungseinrichtung (30) den Rechnungsdatensatz zur Erstellung der Rechnung zu der Berechnungseinrichtung überträgt, die dem Kommunikationsnetz (20), einem anderen Kommunikationsnetz oder dem Rechnungsnetz zugeordnet ist.

18. Kommunikationssystem nach einem der Ansprüche 13 bis 17,
**dadurch gekennzeichnet, dass**
das Rechnernetz das Internet und das Kommunikationsnetz (20 ein Fernsprechnetz ist.

19. Kommunikationssystem nach einem der Ansprüche 13 bis 18,
**gekennzeichnet durch**
eine der Zahlungseinrichtung (30) zugeordnete Speichereinrichtung, in der Käufer-spezifische Daten abgelegt sind,
eine Einrichtung zum Aktualisieren der Käufer-spezifische Daten werden, und
eine Einrichtung, die in Abhängigkeit von den Käufer-spezifischen Daten den jeweiligen Käufern den Zugriff auf die Datenverarbeitungseinrichtung (40 eines Händlers erlaubt oder verweigert.
